# EUROPEAN PATENT APPLICATION

(11) **EP 1 829 934 A1**
(43) Date of publication of application: **05.09.2007**
(21) Application number: 05816825.3
(22) Date of filing: 14.12.2005
(51) Int. Cl.: C08L 101/12, B60C 1/00, C08K 3/10, C08L 61/00

(54) **RUBBER COMPOSITION AND PNEUMATIC TIRE USING SAME**

(30) Priority: 21.12.2004 JP 2004369256; 21.12.2004 JP 2004369257
(71) Applicant: Bridgestone Corporation, Tokyo 104-8340 (JP)
(72) Inventor: KATO, Seiichi, BRIDGESTONE CORPORATION, Kodaira-shi, Tokyo 187-8531 (JP); FUJIKI, Kumi, BRIDGESTONE CORPORATION, Kodaira-shi, Tokyo 187-8531 (JP)
(74) Representative: Whalley, Kevin
(86) International application number: PCT/JP2005/022934
(87) International publication number: WO 2006/068013

(57) **Abstract**

This invention relates to a rubber composition capable of providing high gripping performances without tire performances such as facture properties, wear resistance and the like and a workability in factories when being used in a tire tread as well as a tire using the same, and more particularly to a rubber composition comprising a rubber component and a particular amount of a reaction product obtained by reacting an inorganic metal compound and a phenolic resin at a particular ratio, a rubber composition comprising a rubber component and a combination of an inorganic metal compound and a phenolic resin, and a pneumatic tire using these rubber compositions in a tread member.

## Description

### TECHNICAL FIELD

This invention relates to a rubber composition and a pneumatic tire using the same, and more particularly to a rubber composition developing excellent gripping performances when being used in a tire tread and a tire using the same.

### RELATED ART

Recently, it is strongly demanded to develop pneumatic tires possessing high running performances with the improvement of performances in automobiles, the paving of roads and the advance of expressway networks. As the running performances become higher, it is possible to surely and stably run the vehicle even at a higher speed. Particularly, the gripping performances typified by acceleration performance and braking performance are important requirements.

For the purpose of providing high gripping performances, there has hitherto been known a method wherein styrene-butadiene copolymer rubber having a high bound styrene content as rubber having a high glass transition temperature is used in a rubber composition for a tire tread. In this method, however, there is an inconvenience that the value of tan δ lowers with the rise of rubber temperature due to the running and hence the griping performances are deteriorated with the rise of the tire temperature.

In order to solve the above inconvenience, JP-A-59-187011 has reported a technique of using a copolymer rubber obtained by copolymerizing a monomer such as 1,3-butadiene, styrene, isoprene or the like with a methacrylate compound or an acrylate compound containing diphenyl phosphate group such as diphenyl-2-methacryloyloxyethyl phosphate, diphenyl-2-acryloyloxyethyl phosphate or the like.

Besides, there are known a method wherein the value of tan δ in the rubber composition is increased by using a compounding system highly filled with process oil and carbon black, a method wherein the gripping performances are improved by adding a certain type of a resin to enhance cohesion between rubber and road surface, and so on.

The technique of JP-A-59-187011 can not be applied natural rubber but also has a problem that properties inherent to the polymer such as styrene-butadiene copolymer rubber or polybutadiene rubber are damaged in accordance with the production conditions. In the method using the compounding system highly filled with process oil and carbon black,, the gripping performances are improved, but the fracture properties and wear resistance are considerably deteriorated, so that the high filling is critical and there is an inconvenience that it is difficult to provide the gripping performances at a higher level.

In the method of improving the gripping performances by adding a certain type of a resin, as the gripping performances by the resin become higher, such a resin generally tends to obstruct the workability in factories because the adhesion property to a metallic mixer and a metallic roll existing in the production steps becomes high. Therefore, it is actual station that it is difficult to improve the gripping performances by improving the resin.

It is, therefore, an object of the invention to provide a rubber composition capable of providing higher gripping performances without damaging tire performances such as fracture properties, wear resistance and the like and the workability in factories when being used in a tire tread as well as a tire using the same.

### DISCLOSURE OF THE INVENTION

The inventors have made various studies in order to solve the above problems and found that the above problems can be solved by compounding a particular amount of a reaction product obtained by reacting an inorganic metal compound and a phenolic resin at a particular ration with a rubber composition or by compounding a combination of an inorganic metal compound a phenolic resin with a rubber composition, and as a result the invention has been accomplished.

That is, the rubber composition according to the invention comprises 0.1-150 parts by mass of a metal salt of a phenolic resin obtained by reacting a phenolic resin and an inorganic metal compound within a range of 4:1-100:1 based on 100 parts by mass of a rubber component.

Also, the rubber composition according to the invention comprises a rubber component, at least one inorganic metal compound represented by the following general formula (I):

MX (I)

(wherein M a metal cation of lithium, sodium, potassium, rubidium, cesium, beryllium, magnesium, calcium, strontium, barium, radium, aluminum, iron, copper, tin, titanium, vanadium or manganese and X is a counter anion to the metal cation), and at least one phenolic resin.

Also, the pneumatic tire according to the invention is characterized by using the rubber composition according to the invention in a tread.

In the tire using the rubber composition according to the invention in the tread, the gripping performances can be largely improved as compared with the conventional one without damaging the tire performances such as fracture properties, wear resistance and the like and the workability in factories.

### BEST MODE FOR CARRYING OUT THE INVENTION

The invention will be described in detail with reference to embodiments below. A first embodiment of the rubber composition according to the invention comprises a rubber component and a metal salt of a phenolic resin obtained by the reaction between a phenolic resin and an inorganic metal compound. As the rubber component, natural rubber and synthetic rubbers may be used alone or in a combination of two or more, and there can be preferably used natural rubber, styrene-butadiene copolymer rubber, polybutadiene rubber, polyisoprene rubber, halogenated butyl rubber, EPDM rubber and the like.

In the first embodiment of the rubber composition according to the invention, the inorganic metal compounds may be used alone or in a combination of two or more, and mention may be preferably made of metal salts including a metal selected from the group consisting of lithium, sodium, potassium, rubidium, cesium, beryllium, magnesium, calcium, strontium, barium, radium, aluminum, iron, copper, tin, titanium, vanadium and manganese. A salt of lithium, sodium, magnesium, calcium, strontium, barium, aluminum, iron, titanium, copper or zinc is more preferable. As a concrete example of the inorganic metal compound are mentioned beryllium oxide, beryllium chloride, beryllium sulfate, beryllium nitrate, magnesium oxide, magnesium hydroxide, magnesium acetate, magnesium hydrogensulfate, magnesium sulfate, magnesium fluoride, magnesium chloride, magnesium bromide, magnesium iodide, magnesium carbonate, magnesium hydrogencarbonate, magnesium benzoate, magnesium chromate, magnesium phosphate, magnesium hydrogenphosphate, magnesium nitrate, magnesium lactate, magnesium oxalate, magnesium perchlorate, magnesium stearate, magnesium succinate, calcium oxide, calcium hydroxide, calcium sulfate, calcium acetate, calcium benzoate, calcium carbonate, calcium phosphate, calcium hydrogenphosphate, calcium dihydrogenphosphate, calcium fluoride, calcium chloride, calcium bromide, calcium iodide, calcium citrate, calcium formate, calcium gluconate, calcium glycerophosphate, calcium phosphinate, calcium lactate, calcium molybdate, calcium nitrate, calcium nitrite, calcium oleate, calcium oxalate, calcium palmitate, calcium peroxide, calcium propionate, calcium silicate, calcium stearate, calcium tartrate, calcium thiocyanate, calcium tungustate, calcium pantothenate, strontium acetate, strontium fluoride, strontium chloride, strontium bromide, strontium iodide, strontium carbonate, strontium formate, strontium hydroxide, strontium oxide, strontium nitrate, strontium oxalate, strontium sulfate, barium acetate, barium aluminate, barium borate, barium fluoride, barium chloride, barium bromide, barium iodide, barium carbonate, barium chlorate, barium chromate, barium phosphate, barium hydrogenphosphate, barium hydroxide, barium lactate, barium molybdate, barium nitrate, barium oxalate, barium perchlorate, barium peroxide, barium stearate, barium sulfate, barium sulfite, barium thiocyanate, barium thiosulfate, barium titanate, aluminum oxide, aluminum hydroxide, aluminum chloride, aluminum bromide, aluminum acetate, aluminum sulfate, aluminum borate, aluminum iodide, aluminum lactate, aluminum laurate, aluminum nitrate, aluminum oleate, aluminum phosphate, aluminum fluoride, iron oxide, iron hydroxide, iron fluoride, iron chloride, iron bromide, iron iodide, iron lactate, iron nitrate, iron sulfate, iron sulfide, iron acetate, copper oxide, copper hydroxide, copper sulfate, copper chloride, copper fluoride, copper bromide, copper iodide, copper carbonate, copper naphthenate, copper oleate, copper oxalate, copper phosphate, copper nitrate, copper stearate, tin oxide, tin hydroxide, tin fluoride, tin chloride, tin bromide, tin iodide, tin oxalate, titanium oxide, titanium chloride, titanium sulfate, vanadium oxide, vanadium sulfate, manganese oxide, manganese sulfate, manganese bromide, manganese acetate, manganese benzoate, manganese carbonate, manganese chloride, manganese oxalate, manganese nitrate and the like.

In the first embodiment of the invention, phenolic resins may be used alone or in a combination of two or more, and phenolic resins of both novolac type and resol type can be used. Also, modified phenolic resin and the like have the same effect. As a monomer for the phenolic resin are concretely mentioned phenol, alkylphenol such as cresol or the like, resol and so on. As a monomer copolymerizable therewith are concretely mentioned formaldehyde, acetylene, ethylene and so on, but such a monomer is not limited thereto. As the phenolic resin is a resin obtained by polymerizing a phenol having an alkyl group with a carbon number of 2-9 with another organic compound, and there can be preferably used a resin having a polymerization degree of not more than 10. There are preferably mentioned p-t-butylphenol-formaldehyde resin, p-t-butylphenol-acetylene resin and the like, and p-t-butylphenol-acetylene resin is more preferable.

In the first embodiment of the rubber composition according to the invention, the metal salt of the phenolic resin can be obtained by the following method of reacting a phenolic resin and an inorganic metal compound. At first, the phenolic resin is dissolved in an organic solvent such as toluene, hexane, cyclohexane, THF, acetone, benzene or the like, and thereafter the inorganic metal compound is added and stirred for several minutes to several days. Then, the filtration is conducted and the solvent is removed from the filtrate, whereby the metal salt can be obtained. Also, the metal salt can be obtained by mixing and reacting the inorganic compound with the phenolic resin raised to a temperature above its softening point or melted. Moreover, as a means for raising the temperature is mentioned a method of milling the phenolic resin with a pressure type kneader, but it is not particularly limited to this method.

The first embodiment of the rubber composition according to the invention uses the metal salt of the phenolic resin obtained by reacting the phenolic resin and the inorganic metal compound within a range of 4:1-100:1. However, when the compounding amount of the inorganic metal compound is less than the above range, the sufficient effect can not be obtained, while when it exceeds the range, it is considered to cause the bad influence upon the properties after the vulcanization. Also, the amount of the metal salt of the phenolic resin compounded is 0.1-150 parts by mass based on 100 parts by mass of the rubber component. When it is less than 0.1 part by mass, the sufficient effect is not obtained, while when it exceeds 150 parts by mass, it is considered to cause the bad influence upon the properties after the vulcanization.

A second embodiment of the rubber composition according to the invention comprises the rubber component and a combination of at least one inorganic compound represented by the general formula (I) and at least one phenolic resin. As the rubber component, natural rubber and the synthetic rubbers may be used alone or in a combination of two or more. As the synthetic rubber are mentioned synthetic polyisoprene rubber, polybutadiene rubber, styrene-butadiene copolymer rubber and the like.

In the second embodiment of the invention, the compound of the general formula (I) is preferable when X is oxygen, sulfur, hydroxy group, halogen group, carbonic acid, sulfuric acid or stearic acid and M is magnesium, calcium, strontium or barium. As a concrete example of the compound represented by the general formula (I) are mentioned beryllium oxide, beryllium chloride, beryllium sulfate, beryllium nitrate, beryllium sulfide, magnesium oxide, magnesium hydroxide, magnesium acetate, magnesium hydrogensulfate, magnesium sulfate, magnesium fluoride, magnesium chloride, magnesium bromide, magnesium iodide, magnesium carbonate, magnesium hydrogencarbonate, magnesium benzoate, magnesium chromate, magnesium phosphate, magnesium hydrogenphosphate, magnesium nitrate, magnesium lactate, magnesium oxalate, magnesium perchlorate, magnesium stearate, magnesium succinate, magnesium sulfide, calcium oxide, calcium hydroxide, calcium sulfate, calcium acetate, calcium benzoate, calcium carbonate, calcium phosphate, calcium hydrogenphosphate, calcium dihydrogenphosphate, calcium fluoride, calcium chloride, calcium bromide, calcium iodide, calcium citrate, calcium formate, calcium gluconate, calcium glycerophosphate, calcium phosphinate, calcium lactate, calcium molybdate, calcium nitrate, calcium nitrite, calcium oleate, calcium oxalate, calcium palmitate, calcium peroxide, calcium propionate, calcium silicate, calcium stearate, calcium tartrate, calcium thiocyanate, calcium tungustate, calcium pantothenate, calcium sulfide, strontium acetate, strontium fluoride, strontium chloride, strontium bromide, strontium iodide, strontium carbonate, strontium formate, strontium hydroxide, strontium oxide, strontium nitrate, strontium oxalate, strontium sulfate, strontium sulfide, barium acetate, barium aluminate, barium borate, barium fluoride, barium chloride, barium bromide, barium iodide, barium carbonate, barium chlorate, barium chromate, barium phosphate, barium hydrogenphosphate, barium hydroxide, barium lactate, barium molybdate, barium nitrate, barium oxalate, barium perchlorate, barium peroxide, barium stearate, barium sulfate, barium sulfite, barium thiocyanate, barium thiosulfate, barium titanate, barium sulfide, radium oxide, radium hydroxide, radium fluoride, radium chloride, radium bromide, radium iodide, radium carbonate, radium sulfate, radium sulfide, aluminum oxide, aluminum hydroxide, aluminum chloride, aluminum bromide, aluminum acetate, aluminum sulfate, aluminum borate, aluminum iodide, aluminum lactate, aluminum laurate, aluminum nitrate, aluminum oleate, aluminum phosphate, aluminum fluoride, iron oxide, iron hydroxide, iron fluoride, iron chloride, iron bromide, iron iodide, iron lactate, iron nitrate, iron sulfate, iron sulfide, iron acetate, copper oxide, copper hydroxide, copper sulfate, copper acetate, copper chloride, copper fluoride, copper bromide, copper iodide, copper carbonate, copper naphthenate, copper oleate, copper oxalate, copper phosphate, copper nitrate, copper stearate, tin oxide, tin hydroxide, tin fluoride, tin chloride, tin bromide, tin iodide, tin oxalate, titanium oxide, titanium chloride, titanium sulfate, vanadium oxide, vanadium sulfate, manganese oxide, manganese sulfate, manganese bromide, manganese acetate, manganese benzoate, manganese carbonate, manganese chloride, manganese oxalate, manganese nitrate and the like.

Further, as the phenolic resin in the second embodiment of the invention may be used phenolic resins of both novolac type and resol type. Also, modified phenolic resin and the like have the same effect. As a monomer for the phenolic resin are concretely mentioned phenol, alkylphenol such as cresol or the like, resol and so on. As a monomer copolymerizable therewith are concretely mentioned formaldehyde, acetylene, ethylene and so on, but such a monomer is not limited thereto. There are preferably mentioned p-t-butylphenol-formaldehyde resin, p-t-butylphenol-acetylene resin and the like, and p-t-butylphenol-acetylene resin is more preferable.

In the second embodiment of the rubber composition according to the invention, the amount of the compound represented by the formula (I) is preferably 0.1-20 parts by mass, more preferably 0.1-10 parts by mass based on 100 parts by mass of the rubber component. When the amount is less than 0.1 part by mass, the sufficient effect is not necessarily obtained, while when it exceeds 20 parts by mass, the objected performance is obtained, but it is considered to cause the bad influence upon the properties after the vulcanization.

In the rubber composition according to the invention, the reinforcing filler is not particularly limited, but can include one or more of carbon black, silica, alumina, aluminum hydroxide, calcium carbonate, titanium oxide and the like. Carbon black can be preferably used.

In the invention, additives usually used in the rubber industry such as a softening agent, an antioxidant, a coupling agent, a vulcanization accelerator, an accelerator activator, a vulcanizing agent and the like can be compounded within a range of usually used amounts, if necessary, in addition to the above rubber component, reinforcing filler and resin.

### <Examples>

The following examples are given in illustration of the invention and are not intended as limitations thereof.

### Examples 1-6, Comparative Examples 1-3

A tire to be tested is prepared by preparing a rubber composition according to a compounding recipe shown in Table 1 by a usual manner and applying to a tire tread. Moreover, numerical value in this table is part by mass. Also, the tire is a tire for a passenger car having a tire size of 225/40R18. The gripping performance of the tire to be tested is evaluated by running on a test circuit course of 4.4 km as follows. It is evaluated by measuring a lap time of each of the example tires and comparative tires from 10-20 circuits and dividing an average lap time by a time of the tire of Comparative Example 1 and representing a value obtained by multiplying reciprocal of the divided value by 100 as an index. The larger the index value, the higher the gripping performance, while the smaller the index value, the poorer the gripping performance. The evaluation results are also shown in Table 1.

**Table 1**

| | Comparative Example 1 | Comparative Example 2 | Comparative Example 3 | Example 1 | Example 2 | Example 3 | Example 4 | Example 5 | Example 6 |
|---|---|---|---|---|---|---|---|---|---|
| Styrene-butadiene copolymer rubber *1 | 150 | 150 | 150 | 150 | 150 | 150 | 150 | 150 | 150 |
| Carbon black *2 | 80 | 80 | 80 | 80 | 80 | 80 | 80 | 80 | 80 |
| Phenolic resin A *3 | - | 20 | - | - | - | - | - | - | - |
| Phenolic resin B *4 | - | - | 20 | - | - | - | - | - | - |
| Aromatic oil | 20 | - | - | - | - | - | - | - | - |
| Stearic acid | 2 | 2 | 2 | 2 | 2 | 2 | 2 | 2 | 2 |
| Metal salt of phenolic resin A *5 | - | - | - | 20 | - | - | - | - | - |
| Metal salt of phenolic resin B *6 | - | - | - | - | 20 | - | - | - | - |
| Metal salt of phenolic resin C *7 | - | - | - | - | - | 20 | - | - | - |
| Metal salt of phenolic resin D *8 | - | - | - | - | - | - | 20 | - | - |
| Metal salt of phenolic resin E *9 | - | - | - | - | - | - | - | 20 | - |
| Metal salt of phenolic resin F*10 | - | - | - | - | - | - | - | - | 20 |
| Antioxidant *11 | 1 | 1 | 1 | 1 | 1 | 1 | 1 | 1 | 1 |
| Vulcanization accelerator A *12 | 1 | 1 | 1 | 1 | 1 | 1 | 1 | 1 | 1 |
| Vulcanization accelerator B *13 | 1 | 1 | 1 | 1 | 1 | 1 | 1 | 1 | 1 |
| Sulfur | 2 | 2 | 2 | 2 | 2 | 2 | 2 | 2 | 2 |
| Dry gripping performance | 100 | 112 | 109 | 120 | 125 | 130 | 128 | 124 | 126 |

| | | | | | | | | | |
|---|---|---|---|---|---|---|---|---|---|
| * 1 Tafden 4350, made by Asahi Chemical Industry Co., (bound styrene content: 39%, vinyl bond content: 38%, extended with 50 parts by of aromatic oil based on 100 parts by mass of rubber component) *2 SAF (N2SA: 150 m²/g) *3 Koresin (made by BASF) *4 Hitanol 1502 (novolac type alkyl phenolic resin, made by Hitachi Chemical Industry Co., Ltd.) * 5 lithium salt of phenolic resin obtained by previously reacting Hitanol 1502 (made by Hitachi Chemical Industry Co., Ltd.) with lithium hydroxide (made by Kantou Kagaku Co., Ltd.) *6 sodium salt of phenolic resin obtained by previously reacting Hitanol 1502 (made by Hitachi Chemical Industry Co., Ltd.) with sodium hydroxide (made by Kantou Kagaku Co., Ltd.) *7 magnesium salt of phenolic resin obtained by previously reacting Koresin (made by BASF) with magnesium oxide (made by Kantou Kagaku Co., Ltd.) *8 calcium salt of phenolic resin obtained by previously reacting Koresin (made by BASF) with calcium carbonate (made by Kantou Kagaku Co., Ltd.) *9 zinc salt of phenolic resin obtained by previously reacting Koresin (made by BASF) with zinc oxide (made by Kantou Kagaku Co., Ltd.) *10 aluminum salt of phenolic resin obtained by previously reacting Koresin (made by BASF) with aluminum hydroxide (made by Kantou Kagaku Co., Ltd.) *11 N-1,3-dimethyl-butyl-N'-phenyl-p-phenylenediamine *12 N-t-butyl-2-benzothiazyl sulfenamide (made by Ouchishinko Chemical Industry Co., Ltd.) *13 tetrakis-2-ethylhexylthiuram disulfide (made by Ouchishinko Chemical Industry Co., Ltd.) | | | | | | | | | |

As seen from Table 1, the gripping performance is improved in the examples as compared with the comparative examples.

### Examples 7-13, Comparative Examples 4-6

A tire to be tested is prepared by preparing a rubber composition according to a compounding recipe shown in Table 2 by a usual manner and applying to a tire tread. Moreover, numerical value in this table is part by mass. Also, the tire has a tire size of 225/40R18. The gripping performance of the tire to be tested is evaluated in the same manner as in Example 1 except that an average lap time of each of the example tires and comparative tires is divided by a time of the tire of Comparative Example 4 and a value obtained by multiplying reciprocal of the divided value by 100 is represented as an index. The evaluation results are also shown in Table 2.

**Table 2**

| | Comparative Example 4 | Comparative Example 5 | Comparative Example 6 | Example 7 | Example 8 | Example 9 | Example 10 | Example 11 | Example 12 | Example 13 |
|---|---|---|---|---|---|---|---|---|---|---|
| Styrene- butadiene copolymer rubber *1 | 150 | 150 | 150 | 150 | 150 | 150 | 150 | 150 | 150 | 150 |
| Carbon black *2 | 80 | 80 | 80 | 80 | 80 | 80 | 80 | 80 | 80 | 80 |
| Phenolic resin A*3 | - | 40 | - | 40 | 40 | 40 | 40 | 40 | 40 | - |
| Phenolic resin B*4 | - | - | 40 | - | - | - | - | - | - | 40 |
| Aromatic oil | 40 | - | - | - | - | - | - | - | - | - |
| Stearic acid | 2 | 2 | 2 | 2 | 2 | 2 | 2 | 2 | 2 | 2 |
| Magnesium oxide *14 | - | - | - | 0.5 | 2 | - | - | - | - | 2 |
| Magnesium hydroxide *14 | - | - | - | - | - | 2- | - | - | - | - |
| Calcium oxide *14 | - | - | - | - | - | - | 2 | - | - | - |
| Calcium hydroxide *14 | - | - | - | - | - | - | - | 2 | - | - |
| Calcium carbonate *14 | - | - | - | - | - | - | - | - | 2 | |
| Zinc oxide | 3 | 3 | 3 | 3 | 3 | 3 | 3 | 3 | 3 | 3 |
| Antioxidant *11 | 1 | 1 | 1 | 1 | 1 | 1 | 1 | 1 | 1 | 1 |
| Vulcanization accelerator A *12 | 1 | 1 | 1 | 1 | 1 | 1 | 1 | 1 | 1 | 1 |
| Vulcanization accelerator B *13 | 1 | 1 | 1 | 1 | 1 | 1 | 1 | 1 | 1 | 1 |
| Sulfur | 2 | 2 | 2 | 2 | 2 | 2 | 2 | 2 | 2 | 2 |
| Dry gripping performance | 100 | 112 | 109 | 119 | 125 | 123 | 124 | 122 | 117 | 117 |

| | | | | | | | | | | |
|---|---|---|---|---|---|---|---|---|---|---|
| * 1-4, 11-13 are the same as in Table 1 *14 commercially available reagents from Kantou Kagaku Co., Ltd. | | | | | | | | | | |

As seen from Table 2, the gripping performance is improved in the examples as compared with the comparative examples. Particularly, the gripping performance is more excellent in Examples 8, 9, 10 and 11.

## Claims

1. A rubber composition comprising 0.1-150 parts by mass of a metal salt of a phenolic resin obtained by reacting a phenolic resin and an inorganic metal compound within a range of 4:1-100:1 based on 100 parts by mass of a rubber component.

2. A rubber composition according to claim 1, wherein the inorganic metal compound is a metal salt including a metal selected from the group consisting of lithium, sodium, potassium, rubidium, cesium, beryllium, magnesium, calcium, strontium, barium, aluminum, iron, copper, zinc, tin, titanium, vanadium and manganese.

3. A rubber composition according to claim 2, wherein the inorganic metal compound is a lithium or sodium salt.

4. A rubber composition according to claim 2, wherein the inorganic metal compound is a magnesium, calcium, strontium or barium salt.

5. A rubber composition according to claim 2, wherein the inorganic metal compound is an aluminum salt.

6. A rubber composition according to claim 2, wherein the inorganic metal compound is an iron salt.

7. A rubber composition according to claim 2, wherein the inorganic metal compound is a titanium salt.

8. A rubber composition according to claim 2, wherein the inorganic metal compound is a copper or zinc salt.

9. A rubber composition according to any one of claims 1-8, wherein the phenolic resin is a a resin obtained by polymerizing phenol having an alkyl group with a carbon number of 2-9 with another organic compound and a polymerization degree of the resin is not more than 10.

10. A rubber composition according to any one of claims 1-9, wherein the rubber component is at least one rubber selected from the group consisting of natural rubber, styrene-butadiene copolymer rubber, polybutadiene rubber, polyisoprene rubber, halogenated butyl rubber and EPDM.

11. A rubber composition comprising a rubber component, at least one inorganic metal compound represented by the following general formula (I):
MX (I)
(wherein M a metal cation of lithium, sodium, potassium, rubidium, cesium, beryllium, magnesium, calcium, strontium, barium, radium, aluminum, iron, copper, tin, titanium, vanadium or manganese and X is a counter anion to the metal cation), and at least one phenolic resin.

12. A rubber composition according to claim 11, wherein X is oxygen, sulfur, hydroxy group, carbonic acid, sulfuric acid or stearic acid.

13. A rubber composition according to claim 11 or 12, wherein M is magnesium.

14. A rubber composition according to claim 11 or 12, wherein M is calcium.

15. A rubber composition according to claim 11 or 12, wherein M is strontium.

16. A rubber composition according to claim 11 or 12, wherein M is barium.

17. A rubber composition according to any one of claims 11-16, wherein a total amount of the compounds represented by the general formula (I) is 0.1-20 parts by mass based on 100 parts by mass of the rubber component.

18. A rubber composition according to any one of claims 11-17, wherein a total amount of the phenolic resin is 0.1-200 parts by mass based on 100 parts by mass of the rubber component.

19. A rubber composition according to any one of claims 11-18, wherein the phenolic resin is p-t-butylphenol-acetylene resin.

20. A pneumatic tire **characterized by** using a rubber composition as claimed in any one of claims 1-19 in a tread member.
